Europäisches Patentamt

European Patent Office

Office européen des brevets

(19)

(11) Veröffentlichungsnummer: **0 149 736**
**B1**

(12) **EUROPÄISCHE PATENTSCHRIFT**

(45) Veröffentlichungstag der Patentschrift:
04.02.87

(51) Int. Cl.⁴: **C 08 C 19/00**

(21) Anmeldenummer: **84112960.4**

(22) Anmeldetag: **27.10.84**

(54) Verfahren zur Herstellung von mit Ameisensäure teilveresterten, Hydroxymethylgruppen tragenden niedermolekularen Homo- und/oder Copolymeren von 1,3-Dienen.

(30) Priorität: **23.12.83 DE 3346714**

(43) Veröffentlichungstag der Anmeldung:
**31.07.85 Patentblatt 85/31**

(45) Bekanntmachung des Hinweises auf die Patenterteilung:
**04.02.87 Patentblatt 87/6**

(84) Benannte Vertragsstaaten:
**AT BE CH DE FR GB IT LI NL SE**

(56) Entgegenhaltungen:
**GB-A-1 072 796**
**US-A-1 640 363**

(73) Patentinhaber: **HÜLS AKTIENGESELLSCHAFT, Patentabteilung / PB 15 - Postfach 13 20, D-4370 Marl 1 (DE)**

(72) Erfinder: **Herrmann, Christoph, Dr., Siedlungsstrasse 3, D-4370 Marl (DE)**

EP 0 149 736 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Niedermolekulare Homo- und Copolymere von -1,3-Dienen sind seit langem bekannt. Für viele Einsatzzwecke ist es angebracht, die Eigenschaften der hydrophoben Polymeren durch Einführung polarer Gruppen gezielt zu verändern. Eine dieser Gruppen ist die Hydroxylgruppe, weil daran z. B. Umsetzungen mit Isocyanaten möglich sind.

Es ist bereits bekannt, Hydroxylgruppen in niedermolekularen Homound Copolymeren von 1, 3-Dienen durch Hydrolyse von entsprechenden Epoxyverbindungen, wie sie z. B. nach dem Verfahren der DE-PS 11 73 658 erhalten werden können, herzustellen. Ein solches mehrstufiges Verfahren ist jedoch aufwendig und durch den Einsatz von nicht leicht zu handhabenden Verbindungen (Ameisensäure, Wasserstoffperoxid) mit weiteren Nachteilen verbunden.

Weiterhin ist es bekannt, Hydroxylgruppen in Form von Hydroxymethylgruppen in ein ungesättigtes Polymeres durch dessen Hydroformylierung und anschließende Hydrierung der Formylgruppen mit Metallcarbonylen einzuführen (GB-PS 1 072 796). Auch hierbei handelt es sich um ein mehrstufiges Verfahren, bei dem relativ teure Katalysatoren eingesetzt werden müssen.

Aufgabe der vorliegenden Erfindung war es nun, ein einfaches und wirtschaftliches Verfahren zur Einführung von Hydroxylgruppen in niedermolekulare Homo- und Copolymere zu entwickeln.

Diese Aufgabe wurde durch die in den Patentansprüchen beschriebenen Maßnahmen gelöst. Dabei ist es angesichts der in der US-PS 3 076 779 beschriebenen Maßnahme als überraschend anzusehen, daß man Formaldehyd an in hohem Grade ungesättigte Polydiene durch eine rein thermische Reaktion anlagern und somit Hydroxygruppen in Form von Hydroxymethylgruppen einführen kann.

Unter Homo- und Copolymeren von 1,3-Dienen werden im Rahmen dieser Erfindung verstanden: Homopolymerisate von z. B. 1,3-Butadien, Isopren, 2,3-Dimethylbutadien und Piperylen, Copolymerisate dieser 1,3-Diene untereinander sowie Copolymerisate dieser 1,3-Diene mit vinylsubstituierten aromatischen Verbindungen, wie z. B. Styrol, $\alpha$-Methylstyrol, Vinyltoluol und Divinylbenzol. Der Gehalt an vinylsubstituierten aromatischen Verbindungen in diesen Copolymerisaten soll 50 Molprozent nicht überschreiten. Solche Produkte können nach vielen bekannten Verfahren des Standes der Technik (z. B. DE-PS 11 86 631, DE-AS 12 12 302, DE-PS 12 92 853, DE-OS 23 61 782 und DE-OS 23 42 885) hergestellt werden.

Neben den "echten" Copolymeren, die durch Polymerisation von 1,3-Dienen mit vinylsubstituierten aromatischen Verbindungen entstehen, sollen im Rahmen dieser Erfindung unter Copolymere auch die Reaktionsprodukte, aus 1,3-Dienen und aromatischen Kohlenwasserstoffen verstanden werden. Bei diesen "unechten" Copolymeren handelt es sich um arylierte Polyene, die dadurch erhalten werden, daß man ein 1,3-Dien, wie z. B. 1,3-Butadien oder Piperylen, in Gegenwart eines geeigneten Katalysators in einem aromatischen Lösemittel, wie z. B. Benzol oder Toluol, reagieren läßt (DE-PSS 11 37 727 und 11 70 932, US-PS 3 373 216, JP-OS 49-32985, DE-OSS 28 48 804 und 30 00 708).

Bevorzugt werden Polybutadiene mit Molekulargewichten ($\bar{M}n$) von 600 bis 7 000, besonders von 800 bis 6 000, eingesetzt. Die Mikrostruktur der Diene in den Homo- bzw. Copolymeren ist nicht kritisch. Sollen die Verfahrensprodukte jedoch dort zum Einsatz kommen, wo eine schnelle oxidative Trocknung verlangt wird, so ist es von Vorteil, wenn der Gehalt an cis-1,4-Doppelbindungen möglichst hoch ist.

Der zur Einführung der Hydroxymethylgruppen dienende Formaldehyd kann sowohl in oligomerer (1,3,5-Trioxan) und polymerer Form (Paraformaldehyd), als auch in wäßriger Lösung bzw. Suspension eingesetzt werden. Nähere Einzelheiten zu Herstellung und Eigenschaften der verschiedenen Formaldehyde sind z. B. der Monographie J. F. Walker, "Formaldehyde", 3. Auflage (1964), zu entnehmen.

Im allgemeinen werden pro 100 g des niedermolekularen Homo- und/ oder Copolymeren von 1,3-Dienen 10 bis 200 g, vorzugsweise 30 bis 150 g Formaldehyd (HCHO) eingesetzt. Die Reaktionen werden im Autoklaven bei Temperaturen von 150 bis 300 °C, vorzugsweise 170 bis 260 °C, durchgeführt.

Da die ungesättigten Polymere oxidationsempfindlich sind, ist es angebracht, alle Operationen unter Inertgasatmosphäre, wie z. B. Stickstoff oder Argon, und gegebenenfalls in Gegenwart eines Stabilisators durchzuführen.

Geeignete Stabilisatoren sind solche, wie sie in der kautschukverarbeitenden Industrie als Alterungsschutzmittel eingesetzt werden (siehe S. Boström, Kautschuk-Handbuch, Band 4 (1961), Seiten 362 bis 384). Typische Vertreter sind 2,2'-Methylen-bis-(4-methyl-6-tert. -butylphenol), abgekürzt BKF, und N-Isopropyl-N' -phenyl-p-phenylendiamin.

Die Stabilisatoren werden im allgemeinen in einer Menge von 0,01 bis 5, vorzugsweise 0,1 bis 1 Gewichtsprozent, bezogen auf das 1,3-Dien-Homo- oder Copolymere, eingesetzt.

Die Umsetzung zwischen dem 1,3-Dien-Homo- oder Copolymeren und Formaldehyd kann sowohl in Gegenwart als auch in Abwesenheit eines Lösemittels stattfinden. Der Einsatz eines Lösemittels ist zum einen angebracht, wenn die Viskosität des Polymeren relativ hoch ist, zum anderen, wenn die Löslichkeitsverhältnisse dadurch beeinflußt werden können.

Als Lösemittel kommen z. B. aliphatische, cycloaliphatische und aromatische Kohlenwasserstoffe in Frage. Typische Vertreter aus diesen Gruppen sind Hexan, Octan, Cyclohexan, Toluol und Xylol.

Weiterhin können auch polare Lösemittel, wie Alkohole, Ether, Ester und Ketone eingesetzt werden. Typische Vertreter dieser Gruppen sind z. B. Methanol, Ethanol, Propanole und Butanole, Diethylenglykoldimethylether, Tetrahydrofuran (THF), Methylformiat, Ethylacetat, Aceton, Methylethylketon und Methylisopropylketon. Die Reaktion ist auch in Gegenwart von Wasser möglich.

**0 149 736**

Da der Einsatz eines Lösemittels nicht verfahrenskritisch ist, ist es nicht sinnvoll, dafür Mengenbereiche anzugeben. Art und Menge eines Lösemittels sind von Fall zu Fall nach verfahrens technischen Gesichtspunkten auszuwählen.

Bei der Durchführung des erfindungsgemäßen Verfahrens geht man im allgemeinen so vor, daß man das 1,3-Dien-Homo- oder Copolymere gegebenenfalls zusammen mit einem oder mehreren Lösemitteln und einem Stabilisator in einem Autoklaven unter Inertgasatmosphäre vorlegt und nach Zugabe des Formaldehyds auf die gewünschte Temperatur erwärmt. Die erforderliche Reaktionszeit richtet sich nach Art und Menge des Polymeren und des gegebenenfalls eingesetzten Lösemittels sowie nach der Reaktionstemperatur. Sie beträgt im allgemeinen 10 Minuten bis 10 Stunden. Die optimale Reaktionszeit läßt sich durch einige orientierende Versuche leicht ermitteln.

Die Reaktion wird durch abkühlen auf Raumtemperatur (18 bis 25 °C) beendet. Die Aufarbeitung erfolgt gegebenenfalls nach vorheriger Wäsche mit z. B. ammoniakalischem Wasser durch destillative Abtrennung der flüchtigen Bestandteile.

Die nach dem erfindungsgemäßen Verfahren erhaltenen funktionalisierten Öle enthalten 0,2 bis 15 Gewichtsprozent, vorzugsweise 0,5 bis 8 Gewichtsprozent, Sauerstoff in Form von statistisch verteilten Hydroxymethylgruppen, die teilweise mit Ameisensäure verestert sind. Die Veresterung rührt daher, daß ein Teil des eingesetzten Formaldehyds disproportioniert. Der Grad der Veresterung ist abhängig von den Reaktionsbedingungen. Sofern die Estergruppen den Einsatzzweck der Reaktionsprodukte nicht behindert, können sie darin verbleiben. Anderenfalls ist eine Hydrolyse nach Methoden des Standes der Technik mit anschließender Aufarbeitung durchzuführen (Houben-Weyl, Methoden der präparativen organischen Chemie, Alkohole I (1979), Seiten 262 bis 273).

Wie bereits eingangs erwähnt, können die nach dem erfindungsgemäßen Verfahren erhaltenen Produkte mit Isocyanaten zu technisch vielfältig einsetzbaren Produkten umgesetzt werden.

Die vorliegende Erfindung wird durch die nachfolgenden Beispiele näher erläutert. Alle Prozentangaben sind - sofern nicht anders angegeben - Gewichtsprozente. Die Mikrostrukturen der eingesetzten Polymeren wurden IR-spektroskopisch bestimmt und stellen die anteilsmäßigen Werte der Doppelbindungen dar. Die Jodzahlen (g Jod/ 100 g Substanz) wurden nach ASTM D 2078 ermittelt, die Viskositäten (mPa s) bei 20 °C nach DIN 53 015 gemessen. Die Hydroxyl-Zahl (OHZ) wurde bestimmt nach DIN 53 240, die Säurezahl (SZ) nach DIN 53 402, die Verseifungszahl (VZ) nach DIN 53 401. Die Werte werden angegeben in mg KOH/g Substanz.

**Beispiel 1**

100 g eines Polybutadienöls mit einer Viskosität (20 °C) von 780 mPas und einer Jodzahl von 445 g/100 g (Mikrostruktur: 74 % cis-1,4- und 25 % trans-1,4-Gehalt, $\overline{M}n$ = 1 700) wurden mit 0,5 g 2,2'- Methylen -bis -(4 -methyl -6 -tert. -butylphenol) (BKF) stabilisiert und mit 61 g Paraformaldehyd [(HCHO)$_n$] unter N$_2$-Atmosphäre im Autoklaven unter Eigendruck und Rühren 4 Stunden bei 225 ° C gehalten. Die Aufarbeitung erfolgte durch 3maliges Waschen mit jeweils 150 ml Ammoniak/Wasser (~ 5 % NH$_3$) und anschließende einstündige Vakuumdestillation bei 140°C. Das Endprodukt enthielt 5,66 % Sauerstoff (nachfolgend "O" abgekürzt), die funktionellen Gruppen wurden charakterisiert durch eine OH-Zahl von 42, eine Säurezahl von 0, 51 und eine Verseifungszahl von 44 mg KOH/g. Die Viskosität betrug 11 500 mPa s (20 °C), die Jodzahl 423 g/100 g. Das Öl hatte einen Restgehalt von 380 ppm Formaldehyd (Gaschromatographisch (GC) bestimmt).

**Beispiele 2 bis 6**

Jeweils 100 g des in Beispiel 1 als Ausgangsprodukt genannten Polybutadienöls wurden bei den in der nachfolgenden Tabelle 1 aufgeführten Bedingungen mit Paraformaldehyd funktionalisiert. Die Reaktionsprodukte wurden wie in Beispiel 1 beschrieben aufgearbeitet.

3

0 149 736

**Tabelle 1**

| Bsp. Nr. | (HCHO)$_n$ (g) | T (°C) | t (h) | O (%) | OH-Zahl (mg KOH/g) | VZ-Zahl |
|---|---|---|---|---|---|---|
| 2 | 15 | 200 | 4 | 3,43 | 35 | 22 |
| 3 | 30 | 200 | 4 | 3,82 | 40 | 33 |
| 4 | 61 | 200 | 4 | 4,46 | 28 | 48 |
| 5 | 61 | 250 | 2 | 5,49 | 48 | 41 |
| 6 | 61 | 250 | 0,25 | 7,19 | 42 | 72 |

**Beispiel 7**

100 g des in Beispiel 1 eingesetzten Polybutadienöls wurden in 150 g Toluol unter $N_2$-Schutzgasatmosphäre gelöst und mit 0,5 g BKF und 61 g Paraformaldehyd im Autoklaven unter Rühren 4 Stunden lang auf 200°C erhitzt. Lösemittel und überschüssiger Formaldehyd wurden anschließend im Ölpumpenvakuum bei 140°C abgezogen. Das Endprodukt hatte einen O-Gehalt von 3,68 %, eine OH-Zahl von 40 und eine VZ von 27 mg KOH/g.

**Beispiel 8**

Beispiel 7 wurde wiederholt mit der Änderung, daß als Lösemittel Diethylenglykoldimethylether (Diglyme) eingesetzt wurde. Das Endprodukt hatte einen O-Gehalt von 5,12 %, eine OH-Zahl von 44 und einer VZ von 41 mg KOH/g.

**Beispiel 9**

100 g eines Polybutadienöls mit einer Viskosität von 3 160 mPa s (20 °C) und einer Jodzahl von 445 g/100 g (Mikrostruktur: 76 % cis-1,4- und 22 % trans-1, 4-Gehalt, $\bar{M}n$ = 4 080) wurden unter $N_2$-Atmosphäre in 100 g Toluol gelöst und mit 0,5 g BKF und 30 g Paraformaldehyd im Autoklaven unter Eigendruck und Rühren 4 Stunden auf 200°C erhitzt. Nach einer Aufarbeitung analog Beispiel 7 enthielt das Produkt 3,84 % O, die funktionellen Gruppen wurden charakterisiert durch eine OH-Zahl von 35, eine Säurezahl von 0,52 und eine Verseifungszahl von 59 mg KOH/g. Die Viskosität (20°C) betrug 18 000 mPa s und die Jodzahl 414. Das Endprodukt enthielt noch 190 ppm HCHO (GC).

**Beispiele 10 bis 13**

Beispiel 9 wurde wiederholt mit der Änderung, daß verschiedene Lösemittel bei unterschiedlichen, in Tabelle 2 angeführten Reaktionsbedingungen eingesetzt wurden.

4

**Tabelle 2**

| Bsp. Nr. | (HCHO)$_n$ (g) | Lösemittel | T (°C) | t (h) | O (%) | OHZ (mg KOH/g) | VZ |
|---|---|---|---|---|---|---|---|
| 10 | 30 | Toluol | 220 | 4 | 3,56 | 31 | 39 |
| 11 | 30 | Hexan | 220 | 4 | 3,46 | 29 | 40 |
| 12 | 30 | THF | 220 | 4 | 2,74 | 26 | 28 |
| 13 | 30 | Diglyme | 200 | 4 | 2,71 | 29 | 27 |

**Beispiele 14 bis 17**

In diesen Beispielen wurden jeweils 100 g von Polybutadienölen verschiedener Mikrostruktur unter den in Tabelle 3 genannten Bedingungen mit Paraformaldehyd analog der Verfahrensweise in Beispiel 1 umgesetzt.

**Tabelle 3**

| Bsp. Nr. | Öl* | (HCHO)$_n$ (g) | T (°C) | t (h) | O (%) | OHZ (mg KOH/g) | VZ |
|---|---|---|---|---|---|---|---|
| 14 | VPÖ | 20 | 180 | 4 | 3,58 | 20 | 26 |
| 15 | VPÖ | 61 | 200 | 4 | 5,48 | 34 | 45 |
| 16 | LITHENE® AM | 61 | 200 | 4 | 3,86 | 39 | 36 |
| 17 | Nisso PB B-1000 | 47 | 200 | 4 | 4,26 | 30 | 27 |

| * Kenndaten des Öls | Verteilung der Doppelbindung | | | |
|---|---|---|---|---|
| | 1,2 % | cis-1,4 % | trans-1,4 % | $\overline{M}n$ |
| VPÖ = Vinyl-Polyöl hüls | 33 | 49 | 14 | 1 730 |
| LITHENE® AM | 60 | - | 15 | 1 300 |
| Nisso PB B-1000 | 87 | - | 13 | 1 220 |

**Beispiel 18**

Es wurde verfahren wie in Beispiel 1 mit der Änderung, daß mit 100 g des dort beschriebenen Polybutadienöls anstelle des Paraformaldehyds 91 g 1,3,5-Trioxan eingesetzt wurden. Das Endprodukt hatte einen O-Gehalt von 4,1%, die OH-Zahl betrug 47 und die VZ 44 mg KOH/g.

**Beispiele 19 bis 23**

Diese Beispiele wurden analog Beispiel 1 durchgeführt mit der Änderung, daß mit 100 g des jeweiligen Polybutadienöls anstelle des Paraformaldehyds eine 50 gewichtsprozentige Formaldehyd/Wasser-Lösung eingesetzt wurde. Die Aufarbeitung erfolgte durch Abtrennen der wäßrigen Phase und anschließende Trocknung des Öls im Vakuum 1 Stunde bei 140 °C.

**Tabelle 4**

| Bsp. Nr. | Polybutadienöl | HCHO in $H_2O$ (g) | T (°C) | t (h) | O (%) | OHZ | VZ (mg KOH/g) |
|---|---|---|---|---|---|---|---|
| 19 | aus Beispiel 1 | 61 | 200 | 4 | 1,37 | 20 | 9 |
| 20 | aus Beispiel 1 | 122 | 200 | 4 | 1,66 | 30 | 2 |
| 21 | aus Beispiel 1 | 122 | 250 | 0,25 | 2,17 | 36 | 10 |
| 22 | aus Beispiel 9 | 122 | 200 | 4 | 1,25 | 20 | 7 |
| 23 | aus Beispiel 9 | 61 | 225 | 4 | 1,41 | 22 | 9 |

**Patentansprüche**

1. Verfahren zur Herstellung von mit Ameisensäure teilveresterten, Hydroxymethylgruppen tragenden niedermolekularen Homo- und/ oder Copolymeren von 1,3-Dienen,
dadurch gekennzeichnet,
daß man Homo- und/oder Copolymere von 1,3-Dienen mit einem mittleren Molekulargewicht ($\bar{M}$n) von 500 bis 8 000 unter Schutzgasatmosphäre und gegebenenfalls in Gegenwart eines Lösemittels und Stabilisators mit Formaldehyd bei Temperaturen von 150 bis 300 °C umsetzt.

2. Verfahren nach Anspruch 1,
dadurch gekennzeichnet,
daß man Homo- und/oder Copolymere von 1,3-Dienen mit einem mittleren Molekulargewicht ($\bar{M}$n) von 600 bis 7 000 einsetzt.

3. Verfahren nach den Ansprüchen 1 und 2,
dadurch gekennzeichnet,
daß man Homo- und/oder Copolymere von 1,3-Dienen mit einem mittleren Molekulargewicht ($\bar{M}$n) von 800 bis 6 000 einsetzt.

4. Verfahren nach den Ansprüchen 1 bis 3,
dadurch gekennzeichnet,
daß man Homo- und/oder Copolymere des 1,3-Butadiens einsetzt.

5. Verfahren nach den Ansprüchen 1 bis 4,
dadurch gekennzeichnet,
daß man die Reaktion bei Temperaturen von 170 bis 260 °C durchführt.

## Claims

1. A process for the production of low molecular weight 1,3-diene homo-and/or co-polymers bearing hydroxymethyl groups partially esterified with formic acid, characterised in that 1,3-diene homo- and/or co-polymers of average molecular weight ($\bar{M}n$) from 500 to 8,000 are reacted with formaldehyde at a temperature of 150 to 300°C in an atmosphere of a protective gas and optionally in the presence of a solvent and a stabiliser.

2. A process according to claim 1, characterised in that 1,3-diene homo- and/or co-polymers of average molecular weight ($\bar{M}n$) from 600 to 7,000 are introduced.

3. A process according to claim 1 or 2, characterised in that 1,3-diene homo- and/or co-polymers of average molecular weight ($\bar{M}n$) from 800 to 6,000 are introduced.

4. A process according to any of claims 1 to 3, characterised in that 1,3-butadiene homo- and/or co-polymers are introduced.

5. A process according to any of claims 1 to 4, characterised in that the reaction is carried out at a temperature of 170 to 260°C.

## Revendications

1. Procédé de préparation d'homopolyméres et/ou copolymères de 1,3-diènes, portant des groupes hydroxyle partiellement estérifiés par l'acide formique, caractérisé par le fait que l'on fait réagir sur du formaldéhyde des homopolymères et/ou copolymères de 1,3-diènes d'un poids moléculaire moyen ($\bar{M}n$) de 500 à 8 000, sous atmosphère de gaz protecteur et éventuellement en présence d'un solvant et d'un stabilisant, à des températures de 150 à 300°C.

2. Procédé selon la revendication 1, caractérisé par le fait que l'on utilise des homopolymères et/ou copolymères de 1,3-diènes, d'un poids moléculaire moyen ($\bar{M}n$) de 600 à 7 000.

3. Procédé selon les revendications 1 et 2, caractérisé par le fait que l'on utilise des homopolymères et/ou copolymères de 1,3-diènes, d'un poids moléculaire moyen ($\bar{M}n$) de 800 à 6 000.

4. Procédé selon les revendications 1 à 3, caractérisé par le fait que l'on utilise des homopolymères et/ou copolymères du 1,3-butadiène.

5. Procédé selon les revendications 1 à 4, caractérisé par le fait que l'on conduit la réaction à des températures de 170 à 260°C.